# EUROPEAN PATENT SPECIFICATION

(11) **EP 2 898 579 B1**
(45) Date of publication and mention of the grant of the patent: **07.06.2017**
(21) Application number: 13798390.4
(22) Date of filing: 20.09.2013
(51) Int. Cl.: H02J 1/04, H02J 1/10, H02J 1/14

(54) **DC POWER DISTRIBUTION SYSTEM**
GLEICHSTROMVERSORGUNGSSYSTEM
SYSTÈME DE DISTRIBUTION DE PUISSANCE À COURANT CONTINU (CC)

(30) Priority: 21.09.2012 US 201261704372 P
(43) Date of publication of application: 29.07.2015
(73) Proprietor: Philips Lighting Holding B.V., 5656 AE Eindhoven (NL)
(72) Inventor: WENDT, Matthias, 5656 AE Eindhoven (NL); DE VAAN, Adrianus Johannes Stephanus Maria, 5656 AE Eindhoven (NL); TAO, Haimin, 5656 AE Eindhoven (NL)
(74) Representative: Verweij, Petronella Daniëlle
(86) International application number: PCT/IB2013/058697
(87) International publication number: WO 2014/045234

(56) References cited:
- JP-A- 2009 159 691
- JP-A- 2011 055 637
- US-A- 4 164 661
- US-A1- 2009 218 888

## Description

### FIELD OF THE INVENTION

The invention relates to a direct current (DC) power distribution system, a DC power distribution method and a DC power distribution computer program. The invention relates further to a power supply control system for being used in the DC power distribution system.

### BACKGROUND OF THE INVENTION

Japanese patent publication 2009 159691 A discloses a power supply system comprising a plurality of power supply units connected in parallel to a DC power feeding line supplying a DC apparatus with power. The system includes a power calculation means which calculates power consumption requested by the DC apparatus. In accordance with the calculated power consumption, a power feeding control means instructs each of the power supply units to operate in a power feeding state or a standby state.

In US 2009/218888 A1 a system for managing electrical power is disclosed. A plurality of DC/DC converters provide DC power to a shared bus. The outputted power of each converter is monitored and a control unit controls the converters based on this monitoring. Further, in US 4164661 A a system for controlling load division is disclosed. The power sources are coupled in parallel and power a common load. The output power of each power source is controlled based on sensing means.

A DC power distribution system is defined by, for instance, the EMerge Alliance Occupied Space Standard (EMerge Standard). Currently, in a DC power distribution system in accordance with the EMerge Standard one or several power supply units are electrically connected to one or several power bars for providing DC power to the one or several power bars, wherein also one or several electrical consumers like lamps are electrically connected to the one or several power bars for receiving the DC power supplied by the one or several power supply units. While installing the DC power distribution system it is difficult to select the right number of power supply units, which supply DC power being sufficient for driving the electrical consumers. In accordance with the EMerge Standard, the power supply units are configured to provide DC power up to a predefined power limit, wherein, if this power limit gets exceeded, the whole DC power distribution system is switched off. In order to avoid this switching off of the DC power distribution system, the power supply can be overspecified, i.e. the number of power supply units can be chosen such that the power limit of a power supply unit will surely not be exceeded. However, this overspecification is accompanied by a relatively large amount of unused power and, thus, by a relatively low power supply efficiency.

### SUMMARY OF THE INVENTION

It is an object of the present invention to provide a DC power distribution system, a DC power distribution method and a DC power distribution computer program, which allow for a more efficient provision of DC power. The invention relates further to a power supply control system for being used in the DC power distribution system.

In a first aspect of the present invention a DC power distribution system is presented, wherein the DC power distribution system comprises:
- an electrical conductor for guiding DC power from several power supply units to an electrical consumer,
- the several power supply units for providing DC power to the electrical consumer, wherein the power supply units are electrically connected to the electrical conductor,
- the electrical consumer being electrically connected to the electrical conductor for receiving the DC power from the several power supply units,
- a power consumption information providing system for providing power consumption information being indicative of the power consumed by the electrical consumer, the power consumption information providing system comprising several power consumption information providing sub units assigned to the power supply units, wherein a power consumption information providing sub unit assigned to a power supply unit is adapted to determine the power consumption information, and
- a power supply control system for controlling the power supply units depending on the provided power consumption information, the power supply control system comprising several power supply control sub units assigned to the power supply units, wherein a power supply control sub unit assigned to a power supply unit is adapted to control the respective power supply unit depending on the power consumption information determined by the respective power consumption information providing sub unit.

Since the power consumption information providing system provides power consumption information being indicative of the power consumed by the electrical consumer and since the power supply control system controls the power supply units depending on the provided power consumption information, the power supply can be adapted to the actually required power in the DC power distribution system, i.e. several power supply units can be electrically connected to the electrical conductor, without overspecifying the DC power distribution system and, thus, without having to provide DC power in an inefficient operation condition for the power supply units. Moreover, the installation of the DC power distribution system can be relatively simple, because the installer just needs to attach a number of power supply units to the electrical conductor, which surely prevents an overload condition, wherein the DC power supply can nevertheless be provided with high efficiency, because the actual DC power supply is controlled depending on the provided power consumption information.

The electrical conductor can be regarded as being a power bar or a bus bar component of the DC power distribution system. The DC power distribution system can comprise one or several electrical conductors. The several power supply units are preferentially connected in parallel for supplying the power. The power supply units can be regarded as being power supply modules.

The DC power distribution system can comprise one or more of the electrical consumers which can be regarded as being peripherals. The electrical consumer can be, for instance, a lighting device like a luminaire, a sensor like a presence sensor for detecting persons in a room, a loudspeaker, et cetera. The power supply units preferentially comprise power converters for converting alternating current (AC) power to the respective DC power. The DC power distribution system can be installed, for instance, in a building, in particular, at a ceiling of a room for, for example, illuminating the room, if at least some of the electrical consumers are lamps. The DC power distribution system can therefore be a lighting system of a building. The DC power distribution system according to the first aspect further comprises an electrical consumer control unit for sending commands to the electrical consumer for controlling the electrical consumer and for sending the commands also to the power supply units, wherein the power consumption information providing sub unit assigned to a power supply unit is adapted to determine the power consumption information based on the sent commands. In particular, the power consumption information providing sub units and the power supply control sub units can be part of the respective power supply unit such that the power supply units can be adapted to monitor the commands sent to the electrical consumer and to provide the required power for the electrical consumer automatically. The power supply units, in particular, the power consumption information providing sub units, can be adapted to be knowledgeable of the different commands to the electrical consumer and the related power requirements. For instance, they can comprise assignments between different commands and related power requirements, which may be provided in a corresponding table, for providing the power consumption information depending on the detected commands.

For the communication between the different systems and units a communication system can be provided, which may be a wired or wireless communication system. For instance, information can be communicated via a wired communication line or via Zigbee.

At least one power supply unit may be operable in a high power mode, in which higher power is supplied, and in a low power mode, in which lower power is supplied, wherein the respective power supply control sub unit assigned to the power supply unit may be adapted to control the power supply unit such that it is in the low power mode, if the power consumption information determined by the respective power consumption information providing sub unit indicates that the electrical consumer requires the lower power or less. For instance, if a power consumption information providing sub unit detects a command indicating that the electrical consumer is in or should be switched to a condition, in which the lower power is required only, the respective power supply control sub unit can control the respective power supply unit such that it is in, in particular, is switched to, the low power mode, which may be regarded as being a standby mode. For example, if the detected command indicates that the electrical consumer will be switched off or switched into its standby mode, the respective power supply unit can be adapted to be switched into its low power mode. This allows for an adaptation of the power supply to low load situations in a relatively simple way such that the efficiency of supplying power can be improved.

Moreover, at least one power supply unit may be operable in a high power mode, in which higher power is supplied, and in a low power mode, in which lower power is supplied, wherein the respective power supply control sub unit assigned to the power supply unit may be adapted to control the power supply unit such that it is in the high power mode, if the power consumption information determined by the respective power consumption information providing sub unit indicates that the electrical consumer requires more than the lower power. For instance, if a command has been detected, which indicates that the electrical consumer has been or should be switched off, the respective power supply unit can be switched into the low power mode. The power consumption information providing sub units and the power supply control sub units can be adapted such that, if in this standby situation a new command is detected, the respective power supply unit is switched into its high power mode, i.e. is woken up for supplying the higher power, if the newly detected command indicates that the higher power is required.

Preferentially, the power supply units are operable in a high power mode, in which higher power is supplied, and in a low power mode, in which lower power is supplied, wherein the power consumption information providing system is adapted to provide the output power supplied by the respective power supply unit as the power consumption information, wherein the power supply control system is adapted to sequentially switch the power supply units to the high power mode depending on the power consumption information, wherein, if for power supply units that have already been switched to the high power mode an output power is provided being larger than a threshold output power, a next power supply unit is switched to the high power mode. Thus, for instance, the power supply units can be controlled such that they share the load in a way that firstly one power supply unit takes the full load and that, if the power supplied by the single power supply unit is not sufficient, a next power supply unit is additionally switched into the high power mode and so forth, until the power supply units operated in the active mode, i.e. in the high power mode, meet the load requirements on the electrical conductor. This process of controlling the power supply units ensures that only one power supply unit is operated in a partial load condition preferentially with the other power supply units being either fully loaded or in standby mode, thereby providing the DC power very efficiently.

It is also preferred that power supply units are operable in a high power mode, in which higher power is supplied, and in a low power mode, in which lower power is supplied, wherein the power supply control system is adapted to control the power supply units such that the total times, in which the respective power supply unit is operated in the high power mode, differ by less than a predefined threshold. In particular, the power supply control system is preferentially adapted such that each power supply unit is in the high power mode for substantially the same time. In particular, the power supply control system can be adapted to randomly or in a schedule way assign the power supply units that should supply the power to the electrical consumer such that the average service times of the power supply units, i.e. the respective total time in which the power supply unit is operated in the high power mode, are equal. This can reduce the likelihood that a power supply unit is used much more than another power supply unit and therefore fails relatively early, i.e. maintenance intervals, in which the operability of the DC power distribution system is checked, can be increased.

In a further aspect of the present invention a DC power distribution method is provided, wherein the DC power distribution method comprises:
- providing DC power to an electrical consumer by several power supply units via an electrical conductor to which the power supply units and the electrical consumer are electrically connected,
- receiving the DC power from the several power supply units via the electrical conductor by the electrical consumer,
- providing power consumption information being indicative of the power consumed by the electrical consumer by a power consumption information providing system, the power consumption information providing system comprising several power consumption information providing sub units assigned to the power supply units, wherein a power consumption information providing sub unit assigned to a power supply unit determines the power consumption information, and
- controlling the power supply units depending on the provided power consumption information by a power supply control system, the power supply control system comprising several power supply control sub units assigned to the power supply units, wherein a power supply control sub unit assigned to a power supply unit controls the respective power supply unit depending on the power consumption information determined by the respective power consumption information providing sub unit,
- sending, by an electrical consumer control unit (8), commands to the electrical consumer (4) for controlling the electrical consumer (4),
- sending, by the electrical consumer control unit (8), said commands also to the power supply units (3), and
herein the power consumption information providing sub unit (7) assigned to a power supply unit (3) determines the power consumption information based on the sent commands.In another aspect of the present invention a DC power distribution computer program is presented, wherein the DC power distribution computer program comprises program code means for causing a DC power distribution system as defined in claim 1 to carry out the steps of the DC power distribution method as defined in claim 6, when the DC power distribution computer program is run on a computer controlling the DC power distribution system.

It shall be understood that the DC power distribution system of claim 1, the DC power distribution method of claim 6 and the DC power distribution computer program of claim 7 have preferred embodiments, in particular, as defined in the dependent claims.

It shall be understood that a preferred embodiment of the invention can also be any combination of the dependent claims with the respective independent claim.

These and other aspects of the invention will be apparent from and elucidated with reference to the embodiments described hereinafter.

### BRIEF DESCRIPTION OF THE DRAWINGS

In the drawings:
- Fig. 1: shows schematically and exemplarily an embodiment of a DC power distribution system,
- Fig. 2: shows schematically and exemplarily a power supply unit of the DC power distribution system,
- Fig. 3: shows schematically and exemplarily a further embodiment of a DC power distribution system,
- Fig. 4: shows a power supply unit of the DC power distribution system shown in Fig. 3,
- Fig. 5: shows schematically and exemplarily a further embodiment of a DC power distribution system,
- Fig. 6: shows schematically and exemplarily a further embodiment of a DC power distribution system,
- Fig. 7: shows an embodiment of a power supply control unit of the DC power distribution system shown in Fig. 6,
- Fig. 8: shows schematically and exemplarily a power supply unit of the DC power distribution system shown in Fig. 6,
- Fig. 9: shows a flowchart exemplarily illustrating an embodiment of a DC power distribution method,
- Fig. 10: schematically illustrates connections of different units of the DC power distribution system to an electrical conductor of the DC power distribution system,
- Fig. 11: shows schematically and exemplarily a perspective view of several units of the DC power distribution system connected to an electrical conductor of the DC power distribution system,
- Fig. 12: shows schematically and exemplarily a further embodiment of the DC power distribution system,
- Fig. 13: shows schematically and exemplarily an embodiment of a power supply unit of the DC power distribution system shown in Fig. 12,
- Fig. 14: shows schematically and exemplarily a further embodiment of a DC power distribution system, and
- Fig. 15: shows schematically and exemplarily an embodiment of a power supply control unit of the DC power distribution system shown in Fig. 14.

### DETAILED DESCRIPTION OF EMBODIMENTS

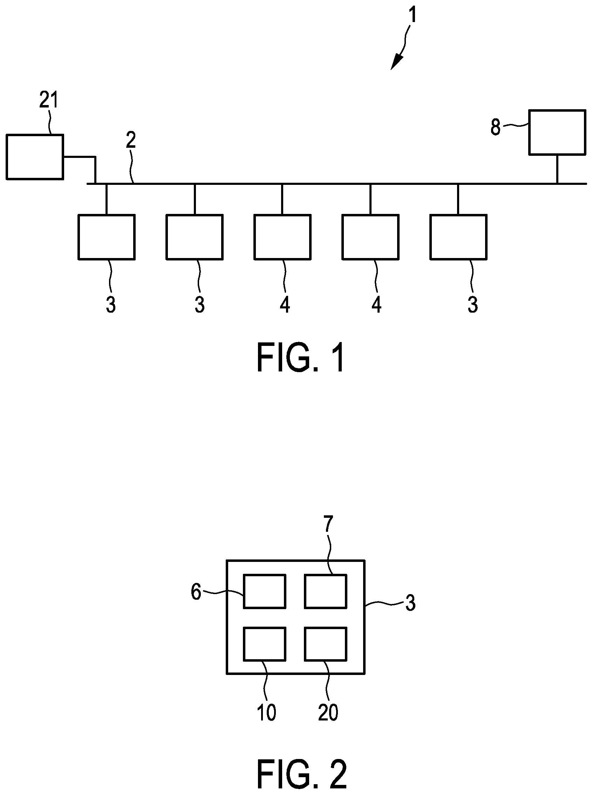

Fig. 1 shows schematically and exemplarily an embodiment of a DC power distribution system. The DC power distribution system 1 comprises an electrical conductor 2, which can be regarded as being a bus bar component or a power bar, for guiding DC power from several power supply units 3 to several electrical consumers 4. The electrical conductor 2 is a power bar to which the power supply units 3 and the electrical consumers 4 are attached. The electrical consumers 4 are lighting devices like lamps. In other embodiments the electrical consumers can also include other electrical devices such as a sensor like a presence sensor for detecting persons in a room, a loudspeaker, et cetera. The power supply units 3 are adapted to provide DC power to the electrical consumers 4 via the electrical conductor 2 and the electrical consumers 4 are adapted to receive the provided DC power via the electrical conductor 2 from the several power supply units 3. The DC power distribution system 1 further comprises a power consumption information providing system for providing power consumption information being indicative of the power consumed by the electrical consumers 4 and a power supply control system for controlling the power supply units 3 depending on the provided power consumption information (not shown in Fig. 1). Moreover, the DC power distribution system 1 comprises an electrical consumer control unit 8 for sending commands to the electrical consumers 4 for controlling the electrical consumers and for sending the commands also to the power supply units 3.

Fig. 2 shows schematically and exemplarily one of the power supply units 3 in more detail. The power supply unit 3 comprises a power converter 20 for converting AC power to the DC power. The AC power can be received via a wire or the like, which may be part of the electrical conductor 2, from an AC power supply unit 21 which maybe electrically connected to the electrical conductor 2. The AC power supply unit 21 is preferentially the AC mains supply.

Each power supply unit 3 comprises a power consumption information providing sub unit 7 being adapted to determine the power consumption information based on the sent commands. Thus, in this embodiment the power consumption information providing system is a distributed system formed by the power consumption information providing sub units 7 of the power supply units 3, wherein each power consumption information providing sub unit 7 is adapted to provide the power consumption information for the respective power supply unit 3. Moreover, in this embodiment each power supply unit 3 comprises a power supply control sub unit 10 being adapted to control the respective power supply unit 3 depending on the power consumption information determined by the respective power consumption information providing sub unit 7. Thus, in this embodiment also the power supply control system is a distributed system formed by the power supply control sub units 10. The respective power supply unit 3 is controlled by the respective power supply control sub unit 10 by controlling the respective power converter 20.

For the communication between the different systems and units a wired communication system is provided. In this embodiment the electrical conductor 2 comprises a control line, to which the different systems and units are connected, in order to allow the different systems and units to exchange communication signals via the control line. In another embodiment, the communication system can be another one. For instance, it can be a wireless communication system like Zigbee. For sending and receiving the communication signals via the communication line the systems and units comprise sending and receiving units. In Fig. 2 exemplarily a sending and receiving unit 6 of the power supply unit 3 is schematically shown.

The power consumption information providing sub units 7 and the power supply control sub units 10 are part of the respective power supply unit 3 such that the power supply units 3 are adapted to monitor the commands sent to the electrical consumers 4 and to provide the required power for the electrical consumers 4 automatically. The power consumption information providing sub units 7 comprise assignments between different commands and related power requirements in a corresponding table for providing the power consumption information depending on the detected commands.

Each power supply unit 3 is operable in a high power mode, which may be regarded as being an active mode and in which a higher power is supplied, and in a low power mode, which may be regarded as being a standby mode and in which lower power is supplied, wherein the respective power supply control sub unit 10 is adapted to control the power supply unit 3, in particular, the power converter 10, such that it is in the low power mode, if the power consumption information determined by the respective power consumption information providing sub unit 7 indicates that the electrical consumers 4 require the lower power or less. For instance, if the power consumption information providing sub unit 7 detects a command indicating that the electrical consumers 4 are in a condition, in which the lower power is required only, the respective power supply control sub unit 10 can control the respective power supply unit 3, in particular, the respective power converter 20, such that it is in the low power mode. In particular, if the detected command indicates that the electrical consumers 4 are switched off or are switched in their standby mode, the respective power supply unit 3 can be adapted to be switched into its low power mode. This allows for an adaptation of the power supply to low load situations such that the efficiency of supplying power can be improved.

The respective power supply control sub unit 10 assigned to the respective power supply unit 3 is preferentially also adapted to control the power supply unit 3 such that it is in the high power mode, if the power consumption information determined by the respective power consumption information providing sub unit 7 indicates that the electrical consumers 4 require more than the lower power.

For instance, if a command has been received by the sending and receiving unit 6 indicating that the electrical consumers 4 are to be switched off, the respective power supply unit 3 can be switched into the low power mode. The power consumption information providing sub units 7 and the power supply control sub unit 10 are preferentially adapted such that, if in this standby situation a further command is detected, which indicates that the higher power is required, the respective power supply unit 3 is switched into its high power mode, i.e. is woken up for supplying the higher power. Thus, for instance, if the power supply units are in a standby mode, every new command may wake the power supply units up, and if no substantial power gets drawn as consequence of the command, they may resume standby automatically.

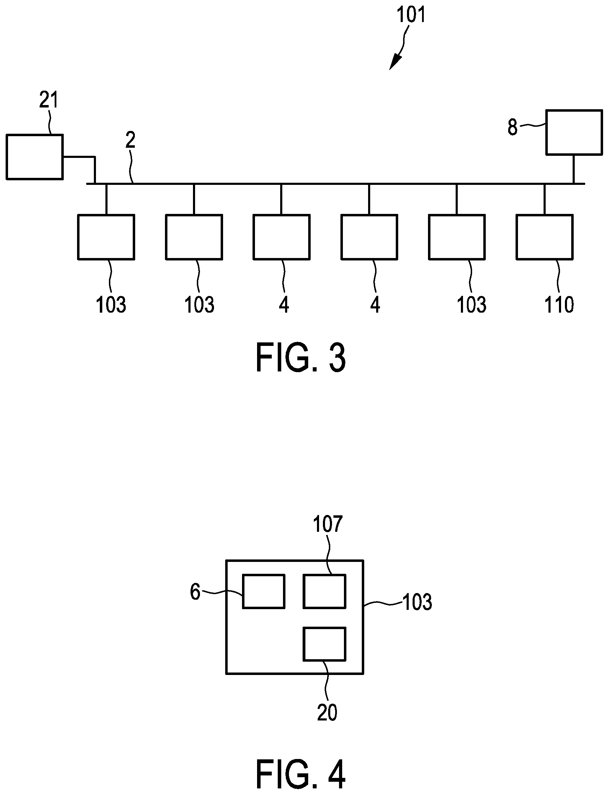

Fig. 3 shows schematically and exemplarily a further embodiment of a DC power distribution system. In this embodiment the DC power distribution system 101 comprises an electrical conductor 2 for guiding DC power from several power supply units 103 to electrical consumers 4. The several power supply units 103 are adapted to provide DC power to the electrical consumers 4 via the electrical conductor 2, to which the several power supply units 103 are electrically connected. Also the electrical consumers 4 are electrically connected to the electrical conductor 2 for receiving the DC power from the several power supply units 103. The DC power distribution system 101 further comprises a power consumption information providing system for providing power consumption information being indicative of the power consumed by the electrical consumers 4 (not shown in Fig. 3) and a power supply control system 110 for controlling the power supply units 103 depending on the provided power consumption information.

Fig. 4 shows a power supply unit 103 schematically and exemplarily in more detail. The power supply unit 103 comprises a sending and receiving unit 6, a power converter 20 for converting AC power received from an AC power supply unit 21 to the DC power to be supplied. The power supply unit 103 further comprises an output power determination unit 107 for determining the output power of the respective power supply unit 103, wherein the determined output power of the respective power supply unit 103 is regarded as being power consumption information being indicative of the power required by the electrical consumers 4. The output power determination units 107 of the several power supply units 103 are therefore power consumption information providing sub units forming the power consumption information providing system. Thus, also in this embodiment the power consumption information providing system is a distributed system. The respective power supply unit 103 is adapted to communicate the respective determined output power to the power supply control system 110 for providing the power consumption information to the power supply control unit 110. The power supply control system 110 can therefore schedule the DC power delivery based on the partial load condition communicated by the respective power supply unit 103. Also this can lead to an improved adaptation of the supplied power to the required power actually needed by the electrical consumers 4, thereby improving the efficiency of the DC power distribution system. Also in this embodiment the DC power distribution system 110 comprises an electrical consumer control unit 8 for controlling the electrical consumers 4 by sending control commands to the electrical consumers 4 via a communication line of the electrical conductor 2.

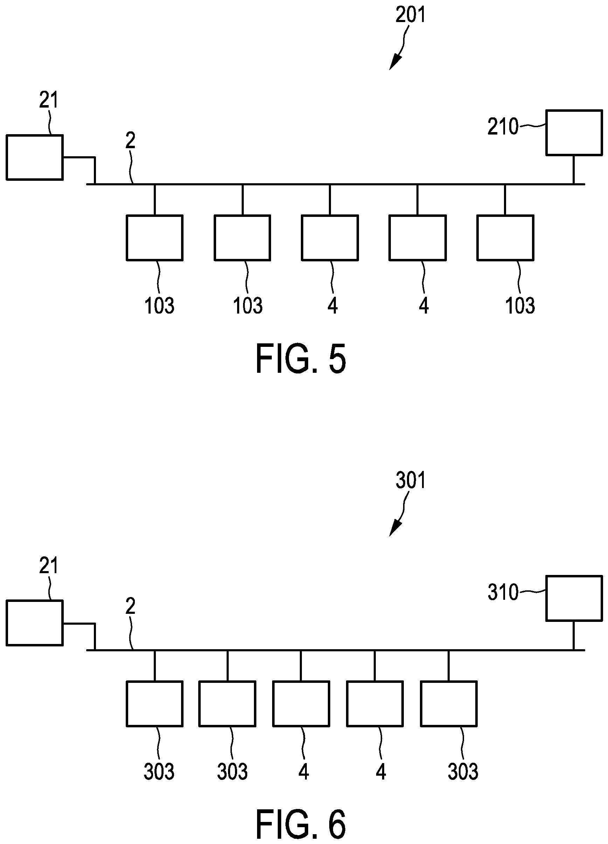

Fig. 5 shows schematically and exemplarily a further embodiment of a DC power distribution system. In this embodiment the DC power distribution system 201 comprises an electrical conductor 2 for guiding DC power from several power supply units 103 to several electrical consumers 4. The several power supply units 103 are adapted to provide the DC power to the electrical consumers 4, wherein the power supply units 103 are electrically connected to the electrical conductor 2. The electrical consumers 4 are also connected to the electrical conductor 2 for receiving the DC power from the several power supply units 103. The DC power distribution system 201 further comprises a power supply control system 210 for controlling the power supply units 103 depending on power consumption information provided by a power consumption information providing system, wherein the power consumption information is indicative of the power consumed by the electrical consumers 4. Moreover, also in this embodiment the DC power distribution system comprises an AC power supply unit 21 being electrically connected to the electrical conductor 2 for providing AC power to the power converters 20 of the power supply units 103 for allowing the power supply units 103 to supply the DC power. In this embodiment, the power supply control system 210 is not only adapted to control the power supply units 103, but also adapted to control the electrical consumers 4. Thus, the same control system 210 can be used for controlling the power supply and for controlling the electrical consumers 4, thereby reducing the control units, and, thus, installation efforts. The integrated control system 210, which can be regarded as being a central control system, can be adapted to decide when a power supply unit 103 can be switched off or switched into its standby mode based on partial load conditions communicated by the output power determination units 107 of the power supply units 103 via the sending and receiving units 6 and the communication line of the electrical conductor 2.

The control system 210 is preferentially adapted to decide which of the power supply units 103 should be in the active mode based on the power requested by the electrical consumers 103 as indicated by the power consumption information. The control is preferentially performed such that the number of active power supply units 103 is minimized, while the minimized number of power supply units 103 still provides the power required as indicated by the power consumption information. This allows the DC power distribution system to run at good efficiency. Alternatively or in addition, the control system 210 can be adapted to operate the active power supply units 103 in their best efficiency mode, which is for example a mode, in which the respective power supply unit 103 provides power being 80 to 90 percent of the full power. For a known power supply unit the best efficiency mode, i.e. the most efficient operating point, is typically known from the respective manufacturer and can be registered in the control system 210.

Fig. 6 shows schematically and exemplarily a further embodiment of a DC power distribution system. The DC power distribution system 301 shown in Fig. 6 also comprises an electrical conductor 2 for guiding DC power from several power supply units 303 to electrical consumers 4. The several power supply units 303 are adapted to provide the DC power to the electrical consumers 4, wherein the power supply units 303 are electrically connected to the electrical conductor 2. The electrical consumers 4 are electrically connected to the electrical conductor 2 for receiving the DC power from the several power supply units 303. The DC power distribution system 301 further comprises a power consumption information providing system for providing power consumption information being indicative of the power consumed by the electrical consumers 4 and a power supply control system 310 for controlling the power supply units 303 depending on the provided power consumption information, wherein in this embodiment the power supply control system is adapted to not only control the power supply units 303, but to also control the electrical consumers 4.

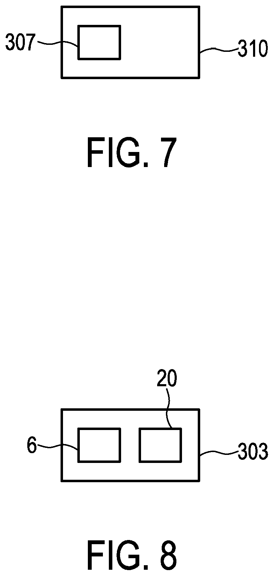

As schematically and exemplarily indicated in Fig. 7, the power consumption information providing system 307 is integrated in the power supply control system 310, wherein the power consumption information providing system 307 is adapted to determine the power consumption information based on the control of the electrical consumers 4 by the power supply control unit 310. In particular, since the electrical consumers 4 are controlled by the control system 310 the control system 310 and, thus, the integrated power consumption information providing system 307 know the power required by the electrical consumers 4 such that the control system 310 can control the power supply units 303 accordingly. Fig. 8 shows schematically and exemplarily a power supply unit 303 comprising a sending and receiving unit 6 and a power converter 20.

It should be noted that, as it is clear to the person skilled in the art, the different units and systems shown in the figures comprise of course more electrical elements like connectors, integrated circuits providing the "intelligent" functions, et cetera.. For instance, the power supply unit 303 exemplarily and schematically shown in Fig. 8 further comprises of course a circuit for modifying the power provided by the power converter 20 depending on control commands received by the sending and receiving unit 6.

The DC power distribution systems 101, 201, 301 described above with reference to Figs. 3 to 8 can comprise power supply units 103, 303, which are adapted to send identification information to the respective power supply control system 110, 210, 310, wherein the identification information is indicative of the power suppliable by the respective power supply unit 103, 3 03 and wherein the power supply control system 110, 210, 310 can be adapted to control the power supply units 103, 303 also depending on the identification information. The identification information can directly be indicative of the power suppliable by the respective power supply unit or indirectly, i.e., for instance, the identification information can provide information which can be used together with a table, which may be stored in the power supply control system and which comprises assignments between the respective information and the suppliable power, for determining the power suppliable by the respective power supply unit.

Since the power supply control system knows which power supply unit is able to supply which power and since the power supply control system has received the power consumption information indicating the required power, the power supply control system can control the power supply units such that power supply units are selected for supplying the required DC power, which allow providing the power at their maximum power limit, in order to provide the power very efficiently.

In the embodiments described above with reference to Figs. 3 to 8 the power supply control system forms a unit located in a housing being separate from the housings of the electrical consumers and from the housings of the power supply units, wherein the housing of the power supply control system and, thus, the power supply control system itself, is addable to the DC power distribution system separately from the addition of the power supply units and the electrical consumers to the DC power distribution system. In these examples the power supply control system is preferentially provided as an additional box that can be hooked up to the electrical conductor as an extra component. This box can be provided as an extra item, in order to optimize an existing DC power distribution system comprising the electrical conductor, several power supply units, one or several electrical consumers, an electrical consumer control unit and an AC power supply. Thus, by providing the power supply control system as a separate additional box, an existing DC power distribution system can be modified such that the power supply is automatically adapted to the actually required power for reducing the power consumption of the DC power distribution system and, thus, for increasing the efficiency of this system.

In the above described embodiments the power supply units can be operable in a high power mode, in which higher power is supplied, and in a low power mode, in which lower power is supplied, wherein the power consumption information providing system can be adapted to provide the output power supplied by the respective power supply unit as the power consumption information. For instance, the power supply units can comprise output power detection units, which form the power consumption information providing system, for determining the respective output power that may be sent via a sending and receiving unit to the power supply control system, which can be a central control system or a distributed control system formed by several power supply control sub units. The power supply control system can then be adapted to sequentially switch the power supply units to the high power mode depending on the power consumption information, wherein, if for power supply units that have already been switched to the high power mode an output power is provided being larger than a threshold output power, a next power supply unit is switched to the high power mode. Preferentially, the power supply units are controlled such that they share the load in a way that firstly one power supply unit takes the full load and that then, if the power supplied by the one power supply unit is not sufficient, a next power supply unit is additionally switched into the high power mode and so forth, until the power supply units operated in the high power mode meet the load requirements on the electrical conductor. This control of the power supply units is preferentially performed such that only one power supply unit is operated in a partial load condition, thereby providing the DC power very efficiently.

The power supply control system is preferentially further adapted such that the total times, in which the respective power supply unit is operated in the high power mode, differ by less than a predefined threshold. In particular, the power supply control system of the respective DC power distribution system is preferentially adapted such that the power supply units are in the high power mode for substantially the same time. The power supply control system can be adapted to randomly or in a scheduled way determine the power supply units that should supply the power to the electrical consumers such that the average service times of the power supply units are substantially equal.

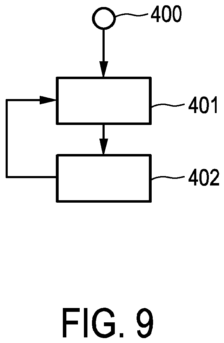

In the following a DC power distribution method will be exemplarily described with reference to a flowchart shown in Fig. 9.

In step 400 the DC power distribution system is initialized. For instance, the DC power distribution system is switched on such that an initial DC power is provided by one or several of the power supply units to the electrical consumers via the electrical conductor. In step 401 power consumption information being indicative of the power consumed by the electrical consumers is provided by the power consumption information providing system. For instance, the output power of the power supply units is determined and provided as power consumption information. In step 402 the power supply units are controlled depending on the provided power consumption information by the power supply control system. Thus, the power supply units supply power depending on the provided power consumption information as controlled by the power supply control system. The provided DC power is then of course received by the electrical consumers. Steps 401 and 402 are preferentially performed in a loop such that continuously power consumption information is provided and used for controlling the power supply units, in order to allow the DC power distribution system to be automatically adapted to the actual load condition.

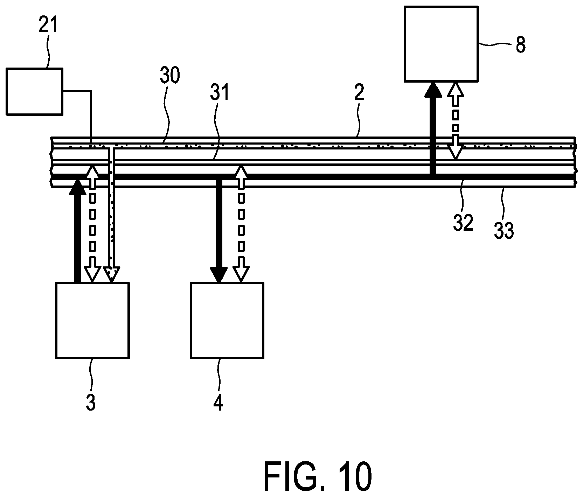

The electrical conductor 2 can comprise several electrical sub conductors for conducting the AC power to the power supply units, for conducting the DC power to the electrical consumers and for transmitting the control signals. Fig. 10 shows schematically and exemplarily such an electrical conductor 2 comprising several sub conductors 30, 31, 32, which can also be regarded as being bus bar component conductors. A first sub conductor 30 is adapted to provide AC power from the AC power supply 21 to the power supply units 3. A second sub conductor 31 is used for transmitting commands and control signals between the different units and a third sub conductor 32 is adapted to provide the DC power supplied by the power supply units 3 to the electrical consumers 4 and to further units like the electrical consumer control unit 8 needing the DC power. The electrical conductor 2 can comprise a holding element 33 like a substantially U-shaped profile carrying the sub conductors 30, 31, 32. The sub conductors 30, 31, 32 can be formed by wires, in particular, by copper wires. More specifically, the sub conductors can be formed by isolated embedded copper sub conductors fixed to the substantially U-shaped carrying profile 33.

Fig. 10 only exemplarily shows how some units can be connected to the electrical conductor 2, wherein it should be clear that more and/or other units can be electrically connected to the several sub conductors as required. For instance, each unit requiring DC power can be connected to the third sub conductor, each unit requiring AC power for converting the same to DC power can be connected to the first sub conductor and the third sub conductor and each unit requiring communication functionality can be connected to the second sub conductor. The electrical conductor 2 with the sub conductors and the carrying element like the U-shaped carrying profile can be regarded as being a power bar or track device.

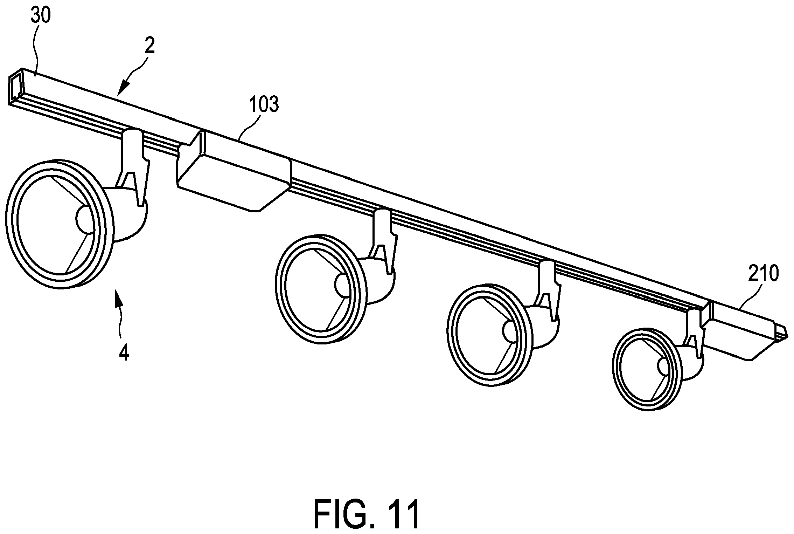

Fig. 11 shows schematically and exemplarily some of the units described above attached to the electrical conductor 2 with the substantially U-shaped profile 30. In Fig. 11 it is shown that electrical consumers 4 being, in this example, lamps are attached to the electrical conductor 2. Moreover, one of the power supply units 103 attached to the electrical conductor 2 is shown, and the power supply control system 210 is shown, wherein the power supply control system 210 is provided in a single box, which can be separated from and attached to the electrical conductor 2 separately from detaching and attaching the other units of the DC power distribution system to and from, respectively, the electrical conductor 2. Fig. 11 only shows some of the units of the DC power distribution system. It should be noted that of course more units and/or other units can be attached to the electrical conductor 2 in accordance with the description provided above and in accordance with Figs. 1 to 8.

The AC power is preferentially provided by an AC power supply being an AC mains power supply, wherein the AC power is preferentially distributed over the length of the electrical conductor, which can also be regarded as being a track. The AC mains connection to the electrical conductor, i.e. the connection of the AC mains power supply to the electrical conductor, can be at any position on the electrical conductor and is preferentially substantially independent of the position of the power supply units with the AC/DC converters on the electrical conductor. The power supply units are connected to the AC mains rail, i.e. the first sub conductor, for receiving the AC power and electrically connected to the DC rail, i.e. to the third sub conductor, for outputting the DC power. A connection to the control lines, i.e. to the second sub conductor, maybe used or not by the respective unit depending on the control functionality of the unit. The electrical consumers, which are preferentially lamp devices, are preferentially connected to the DC rail and the control lines, i.e. to the third and second sub conductors, respectively, but not to the second sub conductors. If the electrical consumers are lamp devices, they can comprise a light source and a lamp driver, wherein the lamp driver can be adapted to convert the DC power received from the DC rail such that the lamp driver can provide a lamp drive current to the light source as required by the light source. The lamp devices can also be electrically connected to the control line of the electrical conductor for controlling the lamp parameters via this control link.

For installers and end customers it is generally not easy to select the right power supply units, in particular, the right number of power supply units, for driving an installed number of electrical consumers like lamp devices. If the predefined power limit of a power supply unit gets exceeded, in accordance with the current EMerge Standard, the whole DC power distribution system is switched off. For solving this problem a trial and error method maybe used, wherein, when an overload condition occurs, electrical consumers may just be detached from the DC power distribution system, until the DC power distribution system is operable again. Another solution for this problem could be an overspecification of the power supply provided by the DC power distribution system such that an overload condition is unlikely. However, such an overspecification leads in the known DC power distribution systems to a reduced efficiency of supplying the DC power. For instance, if the electrical consumers are lamp devices which are dimmed to a brightness level of 10 percent of their maximum brightness level, the power supply units have to be selected such that sufficient power would also be supplied, if each lamp device provides a brightness level of 100 percent. This means that, if the lamp devices are dimmed to, for instance, a brightness level of 10 percent of the maximum brightness level, only a relatively small part of the supplied power is needed, thereby operating the DC power distribution system with very low efficiency.

In order to improve the efficiency of supplying the power within the DC power distribution system the DC power distribution system is preferentially adapted such that the power supply units are driven to their maximum conversion efficiency, while supplying power in accordance with the power required by the one or several electrical consumers as indicated by the provided power consumption information. Thus, the power consumption information providing system and the power supply control system are preferentially adapted such that the power supply units are controlled in a way that at least two conditions are fulfilled: supplying power to the electrical consumers in accordance with the power required by the electrical consumers, i.e. supplying at least the power actually required by the electrical consumers, and driving the power supply units such that the power supply units are driven as close as possible to their maximum conversion efficiency. The power supply control system can be adapted to determine an alternative operation mode of the power supply units, if the power supply units are not operated at their maximum efficiency, and to control the power supply units accordingly. The control of the power supply units such that they are as close as possible operated at their maximum efficiency can be regarded as being a registered power supply control.

The power consumption information providing system and the power supply control system can be integrated in a single processing unit, which can be added to the DC power distribution system. This processing unit can provide the required power consumption information, i.e. the information regarding the required power that the power supply units need to supply to the DC power distribution system, and it can control the power supply units depending on the provided power consumption information. In particular, it can be configured to determine the best setting of the individual power supply units, wherein, for instance, in a particular setting only one power supply unit may supply the power to the electrical consumers, while the other power supply units are switched off or switched into their standby mode. The processing unit can be adapted to detect further parameters of the DC power distribution system and to determine the best setting of the individual power supply units also depending on these further parameters. These further parameters are, for instance, the number of power supplies, their characteristics, the number of electrical consumers like lamps, et cetera. For instance, the power supply units and the electrical consumers can be adapted to send signals to the processing unit being indicative of the respective power supply unit or electrical consumer, respectively, and certain characteristics like the maximum power suppliable by the respective power supply unit or the power required by the respective electrical consumer. The signals sent to the processing unit can also only be indicative of the respective power supply unit or the respective electrical consumer, and/or can be indicative of their respective mode, wherein the processing unit can comprise assignments between the received identification signal and respective characteristics like the power suppliable by the respective power supply unit indicated by the signal or like the power required by the electrical consumer indicated by the signal. The power required by the electrical consumer directly or indirectly indicated by the signal can be used for providing the power consumption information.

The different units and systems of the DC power distribution system having some intelligence like the power supply control system or the power consumption information providing system comprise preferentially corresponding hardware and/or software for providing the intelligence. In particular, the units and systems can comprise microcontrollers or other circuits for providing the respective function.

The power supply units and the electrical consumers can be separate units, which can be separately attached to and detached from the electrical conductor, or they can be attached to each other such that they form a combined power supply unit and electrical consumer, which can be attached together to the electrical conductor. A mixture of separate power supply units and electrical conductors and of combined units being a combination of a power supply unit and an electrical consumer can be attached to the electrical conductor.

The power supply control system may be adapted to control the power supply units such that a power supply unit is completely switched off or in its standby mode as long as its own output set voltage is lower than the actual rail voltage. For instance, the power supply units can comprise a rail voltage detector for detecting the rail voltage, i.e. the voltage on the DC rail of the electrical conductor, which can be communicated together with the respective output set voltage to the power supply control system, wherein the power supply control system can control the respective power supply unit such that it is completely switched off or in its standby mode as long as its own output set voltage is lower than the actual rail voltage. This may allow for an efficient use of the power supply units over a relatively wide range of power levels in the DC power distribution system.

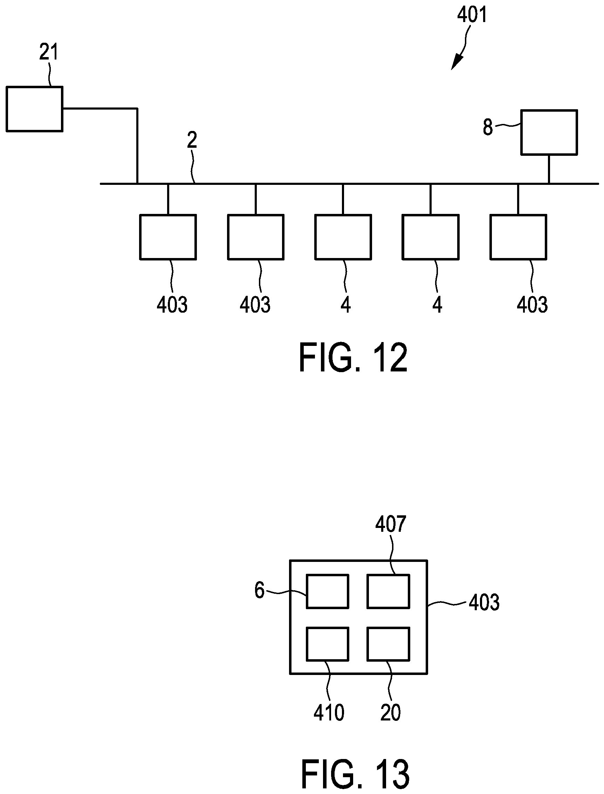

Fig. 12 shows schematically and exemplarily a further embodiment of a DC power distribution system. The DC power distribution system 401 comprises an electrical conductor 2 for guiding DC power from several power supply units 403 to several electrical consumers 4. The electrical conductor 2 and the electrical consumers 4 are similar to the corresponding components described above with reference to, for instance, Fig. 1. The power supply units 403 are adapted to provide DC power to the electrical consumers 4 via the electrical conductor 2 and the electrical consumers 4 are adapted to receive the provided DC power via the electrical conductor 2 from the several power supply units 403. The DC power distribution system 401 further comprises a power consumption providing system for providing power consumption information being indicative of the power consumed by the electrical consumers 4 and a power supply control system for controlling the power supply units 403 depending on the provided power consumption information (not shown in Fig. 12). Moreover, the DC power distribution system 401 comprises an electrical consumer control unit 8 for controlling the electrical consumers 4.

Fig. 13 shows schematically and exemplarily one of the power supply units 403 in more detail. The power supply unit 403 comprises a power converter 20 for converting AC power, which can be received from the AC power supply unit 21, to the DC power. Moreover, the power supply units 403 comprise sending and receiving units 6 such that the power supply units 403 are adapted to send commands being indicative of the power provided by the respective power supply unit 403 and being indicative of additional power providable by the respective power supply unit and to receive the commands.

Each power supply unit 403 further comprises a power consumption information providing sub unit 407 being adapted to determine the power consumption information based on the commands received by the respective power supply unit 403. Thus, in this embodiment the power consumption information providing system is a distributed system formed by the power consumption information providing sub units 407 of the power supply units 403. Furthermore, in this embodiment each power supply unit comprises a power supply control sub unit 410 being adapted to determine the additional power providable by the other power supply units 403 based on the received commands and to control the respective power supply unit 403 depending on the power consumption information determined by the respective power consumption information sub unit 407 and on the additional power providable by the other power supply units 403.

In particular, the power supply units 403 can be adapted to regularly send the load they supply, i.e. the provided power, and to collect in parallel corresponding messages, i.e. the commands, from the other power supply units 403, wherein the messages can contain absolute load information, i.e. the power supplied by the respective power supply unit 403, and information regarding the additional power providable by the respective power supply unit 403. Based on the information contained in these messages and the power actually provided by the power supply unit 403 receiving these messages the respective power consumption information providing sub unit 407 can determine the actual total load on the electrical conductor 2, and based on this determined current total load and the possible additional power providable by the other power supply units 403 the power supply control sub unit 410 of the respective power supply unit 403 can determine whether the other power supply units 403 would still be able to carry the total rest load, i.e. the load not carried by the actual power supply unit 403, if the power provided by the actual respective power supply unit 403 would be reduced. If this is the case, the power supply control sub unit 410 of the respective power supply unit 403 can reduce the set-point voltage of the respective power supply unit 403 accordingly. The set-point voltage is preferentially gradually reduced, wherein the reduction of the set-point voltage will shift the load to the power supply units 403 with a higher set-point voltage. If the set-point voltage of the respective power supply unit 403 is controlled by the power supply control sub unit 410 such that the respective power supply unit 403 does not carry any load anymore, without reaching a lowest allowed value for the set-point voltage, the power supply control sub unit 410 may control the respective power supply unit 403 such that it goes into its standby mode. This control of the different power supply units 403 can be coordinated such that only one power supply unit 403 is controlled in this way at a time, wherein the sequence, in which the power supply units 403 are addressed for controlling the same in this way, can be, for instance, a predefined sequence or a random sequence. For coordinating this control the power supply units 403 can exchange corresponding signals via the electrical conductor 2 or via a wireless data connection like Zigbee.

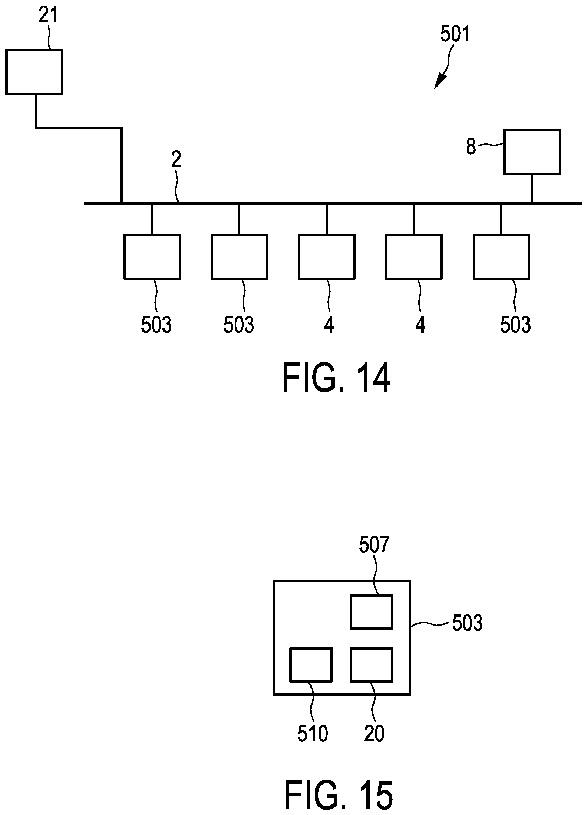

Fig. 14 shows schematically and exemplarily a further embodiment of a DC power distribution system. The DC power distribution system 501 comprises an electrical conductor 2 for guiding DC power from several power supply units 503 to several electrical consumers 4. The electrical conductor 2 and the electrical consumers 4 are similar to the corresponding components described above with reference to, for instance, Fig. 1. The power supply units 503 are adapted to provide DC power to the electrical consumers 4 via the electrical conductor 2 and the electrical consumers 4 are adapted to receive the provided DC power via the electrical conductor 2 from the several power supply units 3. Also in this embodiment the DC power distribution system comprises a power consumption information providing system for providing power consumption information being indicative of the power consumed by the electrical consumers 4 and a power supply control system for controlling the power supply units 503 depending on the provided power consumption (not shown in Fig. 14). Moreover, also the DC power distribution system 501 comprises an electrical consumer control unit 8 for sending commands to the electrical consumers 4 for controlling the same.

Fig. 15 shows schematically and exemplarily one of the power supply units 503 in more detail. The power supply unit 503 comprises a power converter 20 for converting AC power, which can be received from the AC power supply unit 21 via the electrical conductor 2, to the DC power. Moreover, the power supply unit 503 comprises a power consumption information providing sub unit 510 adapted to determine the power consumption information based on the power provided by the respective power supply unit 503. Thus, in this embodiment the power consumption information providing system is a distributed system formed by the power consumption information providing sub units 507 of the power supply units 503. The respective power supply unit 503 further comprises a power supply control sub unit 510 adapted to control the respective power supply unit 503 depending on the power consumption information determined by the respective power consumption information providing sub unit 507. The power supply control system is therefore also a distributed system, wherein the distributed power supply control system is formed by the power supply control sub units 510. The control of the respective power supply unit 503 by the respective power supply control sub unit 510 is provided by controlling the respective power converter 20.

Thus, each power supply unit 503 may randomly over time look at its own load, i.e. at its own provided power, wherein the respective power supply control sub unit 510 can control the respective power supply unit 503 such that, if the respective load is below a peak efficiency point, it may either decide for rising or for eroding the set-point voltage such that it will either start carrying more load to go to the peak efficiency or to carry less load, in order to approach a situation in which the respective power supply unit 503 does not carry any load. The respective power supply control sub unit 510 is preferentially further adapted to not modify the set-point voltage of the respective power supply unit 503, if the respective power supply unit 503 is already operated at its peak efficiency point, i.e. with maximum power providing efficiency. By using this kind of control all power supply units 503 can play over time with their set-point voltages such that it is searched for an optimal load distribution, i.e. a load distribution in which the power supply units can be operated with a maximized power providing efficiency. This control can be regarded as being provided by a distributed searching algorithm, which is distributed among the power supply units 503. The power consumption information provided by the respective power consumption information providing sub unit 507, i.e. the respective load carried by the respective power supply unit 503, can be regarded as being power consumption sub information, wherein the power consumption sub information provided by the several power consumption information providing sub units 507 form a total power consumption information which is distributed among the power supply units 503.

The controls described above with reference to Figs. 12 to 15 rely on stepwise approaching a better system balance by means of preferentially random timing in the distributed searches and small changes in set-point voltages resulting in small changes of the load currents.

If the power supply control system is a distributed system, wherein the different power supply units comprise power supply control sub units forming a distributed logic, one of the power supply control sub units can be a master coordinating the communication between the power supply units. The master can be dynamically assigned to any of the power supply control sub units of the power supply units. The master may be randomly assigned or in accordance with a certain sequence, which may be predefined. However, the communication between the power supply units, in particular, between the power supply control sub units, can also be performed without using a master.

In an embodiment the power supply control system can be adapted such that the power supply units are in standby mode, if they are not loaded.

The power supply units are preferentially connected in parallel for supplying the power within the DC power distribution system, wherein the power consumption information providing system is preferentially adapted to determine the required power that these multiple power supply units need to supply to the DC power distribution system and wherein the power supply control system is preferentially adapted to control the power supply units such that the power supply by the individual power supply units is optimized, while performing the task of together supplying the required power. The power supply control system preferentially optimizes the power supply such that the efficiency of supplying the power is maximized by driving as many power supply units as possible at their power limit. The power supply control system can, for example, be adapted to shut down individual power supply units such that the power supply units that are kept operational are driven near by their most optimal point of power conversion efficiency.

The power consumption information providing system can be adapted to dynamically check the load, i.e. the power consumption, on the track, i.e. on the electrical conductor, wherein the power supply control system can be adapted to check the number of power supply units in operation, i.e. supplying power, in particular supplying the higher power, if they can be operated in a high power mode and in a low power mode, and wherein the power supply control system can be adapted such that, if one of the operating power supply unit fails, other power supply units, which are not in use, can be activated to fill the power shortage. In such a way the reliability of the DC power distribution system may be significantly improved. The power supply units can be adapted to send identification information to the power supply control system for allowing the power supply control system to check the number of power supply units in operation.

At least some of the electrical consumers are preferentially lamp devices such that the DC power distribution system can be regarded as being a rail oriented lighting system, which may be used as track lighting for retail.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Actions like the determination of the power consumption information, the determination of a setting of the power supply units, et cetera performed by one or several units or devices can be performed by any other number of units or devices. These actions and/or the control of the DC power distribution system in accordance with the DC power distribution method can be implemented as program code means of a computer program and/or as dedicated hardware.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

The invention relates to a DC power distribution system, especially a track lighting system, comprising several power supply units and an electrical consumer like a luminaire electrically connected to an electrical conductor being preferentially a power bar. A consumption information providing system provides power consumption information and a power supply control system controls the power supply units depending on the provided power consumption information. This allows adapting the DC power distribution to the actually required power, i.e. several power supply units can be electrically connected to the electrical conductor, without providing DC power in an inefficient operation condition. Moreover, the installation of the DC power distribution system can be relatively simple, because the installer just needs to attach a number of power supply units to the electrical conductor, which surely prevents an overload condition, wherein the DC power can still be supplied with high efficiency.

## Claims

1. A DC power distribution system comprising:
- an electrical conductor (2) for guiding DC power from several power supply units (3) to an electrical consumer (4),
- the several power supply units (3) for providing DC power to the electrical consumer (4), wherein the power supply units (3) are electrically connected to the electrical conductor (2),
- the electrical consumer (4) being electrically connected to the electrical conductor (2) for receiving the DC power from the several power supply units (3), and
- a power consumption information providing system (7) for providing power consumption information being indicative of the power consumed by the electrical consumer (4),
- a power supply control system (10) for controlling the power supply units (3) depending on the provided power consumption information,
wherein the power consumption information providing system comprises several power consumption information providing sub units (7) assigned to the power supply units (3), wherein a power consumption information providing sub unit (7) assigned to a power supply unit (3) is adapted to determine the power consumption information, and wherein the power supply control system comprises several power supply control sub units (10) assigned to the power supply units (3), wherein a power supply control sub unit (10) assigned to a power supply unit (3) is adapted to control the respective power supply unit (3) depending on the power consumption information determined by the respective power consumption information providing sub unit (7),**characterized in that** the DC power distribution system (1) further comprises an electrical consumer control unit (8) for sending commands to the electrical consumer (4) for controlling the electrical consumer (4) and for sending the commands also to the power supply units (3), and
wherein the power consumption information providing sub unit (7) assigned to a power supply unit (3) is adapted to determine the power consumption information based on the sent commands.

2. The DC power distribution system as defined in claim 1, wherein at least one power supply unit (3) is operable in a high power mode, in which higher power is supplied, and in a low power mode, in which lower power is supplied, wherein the respective power supply control sub unit (10) assigned to the power supply unit (3) is adapted to control the power supply unit (3) such that it is in the low power mode, if the power consumption information determined by the respective power consumption information providing sub unit (7) indicates that the electrical consumer (4) requires the lower power or less.

3. The DC power distribution system as defined in claim 1, wherein at least one power supply unit (3) is operable in a high power mode, in which higher power is supplied, and in a low power mode, in which lower power is supplied, wherein the respective power supply control sub unit (10) assigned to the power supply unit (3) is adapted to control the power supply unit (3) such that it is in the high power mode, if the power consumption information determined by the respective power consumption information providing sub unit (7) indicates that the electrical consumer (4) requires more than the lower power.

4. The DC power distribution system as defined in claim 1, wherein the power supply units are operable in a high power mode, in which higher power is supplied, and in a low power mode, in which lower power is supplied, wherein the power consumption information providing system is adapted to provide the output power supplied by the respective power supply unit as the power consumption information, wherein the power supply control system is adapted to sequentially switch the power supply units to the high power mode depending on the power consumption information, wherein, if for power supply units that have already been switched to the high power mode an output power is provided being larger than a threshold output power, a next power supply unit is switched to the high power mode.

5. The DC power distribution system as defined in claim 1, wherein the power supply units are operable in a high power mode, in which higher power is supplied, and in a low power mode, in which lower power is supplied, wherein the power supply control system is adapted to control the power supply units such that the total times, in which the respective power supply unit is operated in the high power mode, differ by less than a predefined threshold.

6. A DC power distribution method comprising:
- providing DC power to an electrical consumer (4) by several power supply units (3) via an electrical conductor (2) to which the power supply units (3) and the electrical consumer (4) are electrically connected,
- receiving the DC power from the several power supply units (3) via the electrical conductor (2) by the electrical consumer (4),
- providing power consumption information being indicative of the power consumed by the electrical consumer (4) by a power consumption information providing system (7),
- controlling the power supply units (3) depending on the provided power consumption information by a power supply control system (10),
wherein the power consumption information providing system comprises several power consumption information providing sub units (7) assigned to the power supply units (3), wherein a power consumption information providing sub unit (7) assigned to a power supply unit (3) determines the power consumption information, and
wherein-the power supply control system comprises several power supply control sub units (10) assigned to the power supply units (3), wherein a power supply control sub unit (10) assigned to a power supply unit (3) controls the respective power supply unit (3) depending on the power consumption information determined by the respective power consumption information providing sub unit (7),
**characterized in that** the method further comprises: .
- sending, by an electrical consumer control unit (8), commands to the electrical consumer (4) for controlling the electrical consumer (4),
- sending, by the electrical consumer control unit (8), said commands also to the power supply units (3), and
wherein the power consumption information providing sub unit (7) assigned to a power supply unit (3) determines the power consumption information based on the sent commands.

7. A DC power distribution computer program, the DC power distribution computer program comprising program code means for causing a DC power distribution system as defined in claim 1 to carry out the steps of the DC power distribution method as defined in claim 6, when the DC power distribution computer program is run on a computer controlling the DC power distribution system.

## Patentansprüche

1. Gleichstromverteilungssystem, umfassend:
- einen elektrischen Leiter (2), um Gleichstromleistung von mehreren Stromversorgungseinheiten (3) zu einem elektrischen Verbraucher (4) zu leiten,
- die mehreren Stromversorgungseinheiten (3), um dem elektrischen Verbraucher (4) Gleichstromleistung zuzuführen, wobei die Stromversorgungseinheiten (3) mit dem elektrischen Leiter (2) elektrisch verbunden sind,
- den elektrischen Verbraucher (4), der mit dem elektrischen Leiter (2) elektrisch verbunden ist, um Gleichstromleistung von den mehreren Stromversorgungseinheiten (3) zu empfangen, sowie
- ein Leistungsaufnahme-Informationsbereitstellungssystem (7) zur Bereitstellung von Leistungsaufnahme-Informationen, die für die von dem elektrischen Verbraucher (4) verbrauchte Leistung indikativ sind,
- ein Stromversorgungssteuersystem (10) zur Steuerung der Stromversorgungseinheiten (3) in Abhängigkeit der vorgesehenen Leistungsaufnahmeinformationen,
wobei das Leistungsaufnahme-Informationsbereitstellungssystem mehrere, den Stromversorgungseinheiten (3) zugewiesene Leistungsaufnahme-Informationsbereitstellungs-Subeinheiten (7) umfasst, wobei eine einer Stromversorgungseinheit (3) zugewiesene Leistungsaufnahme-Informationsbereitstellungs-Subeinheit (7) so eingerichtet ist, dass sie die Leistungsaufnahmeinformationen ermittelt, und wobei das Stromversorgungssteuersystem mehrere, den Stromversorgungseinheiten (3) zugewiesene Stromversorgungssteuerungs-Subeinheiten (10) umfasst, wobei eine einer Stromversorgungseinheit (3) zugewiesene Stromversorgungssteuerungs-Subeinheit (10) so eingerichtet ist, dass sie die jeweilige Stromversorgungseinheit (3) in Abhängigkeit der von der Leis-tungsaufnahme-Informationsbereitstellungs-Subeinheit (7) ermittelten Leistungsaufnahme-Informationen steuert, **dadurch gekennzeichnet, dass** das Gleichstromverteilungssystem (1) weiterhin eine Steuereinheit (8) des elektrischen Verbrauchers zur Übertragung von Befehlen zu dem elektrischen Verbraucher (4) umfasst, um den elektrischen Verbraucher (4) zu steuern und um die Befehle ebenfalls den Stromversorgungseinheiten (3) zu übermitteln, und
wobei die einer Stromversorgungseinheit (3) zugewiesene Leistungsaufnahme-Informationsbereitstellungs-Subeinheit (7) so eingerichtet ist, dass sie die Leis-tungsaufnahme-Informationen aufgrund der übermittelten Befehle ermittelt.

2. Gleichstromverteilungssystem nach Anspruch 1, wobei mindestens eine Stromversorgungseinheit (3) in einem High-Power-Modus, in dem höhere Leistung zugeführt wird, und in einem Low-Power-Modus, in dem geringere Leistung zugeführt wird, betriebsfähig ist, wobei die der Stromversorgungseinheit (3) zugewiesene, jeweilige Stromversorgungssteuerungs-Subeinheit (10) so eingerichtet ist, dass sie die Stromversorgungseinheit (3) so steuert, dass diese sich in dem Low-Power-Modus befindet, wenn die durch die jeweilige Leistungsaufnahme-Informationsbereitstellungs-Subeinheit (7) ermittelten Leistungsaufnahmeinformationen signalisieren, dass der elektrische Verbraucher (4) die geringere Leistung oder weniger erforderlich macht.

3. Gleichstromverteilungssystem nach Anspruch 1, wobei mindestens eine Stromversorgungseinheit (3) in einem High-Power-Modus, in dem höhere Leistung zugeführt wird, und in einem Low-Power-Modus, in dem geringere Leistung zugeführt wird, betriebsfähig ist, wobei die der Stromversorgungseinheit (3) zugewiesene, jeweilige Stromversorgungssteuerungs-Subeinheit (10) so eingerichtet ist, dass sie die Stromversorgungseinheit (3) so steuert, dass diese sich in dem High-Power-Modus befindet, wenn die durch die jeweilige Leistungsaufnahme-Informationsbereitstellungs-Subeinheit (7) ermittelten Leistungsaufnahmeinformationen signalisieren, dass der elektrische Verbraucher (4) mehr als die geringere Leistung erforderlich macht.

4. Gleichstromverteilungssystem nach Anspruch 1, wobei die Stromversorgungseinheiten in einem High-Power-Modus, in dem höhere Leistung zugeführt wird, und in einem Low-Power-Modus, in dem geringere Leistung zugeführt wird, betriebsfähig sind, wobei das Leistungsaufnahme-Informationsbereitstellungssystem so eingerichtet ist, dass es die von der jeweiligen Stromversorgungseinheit abgegebene Ausgangsleistung als die Leistungsaufnahmeinformationen bereitstellt, wobei das Stromversorgungssteuersystem so eingerichtet ist, dass es die Stromversorgungseinheiten in Abhängigkeit der Leistungsaufnahmeinformationen sequentiell in den High-Power-Modus schaltet, wobei, wenn für Stromversorgungseinheiten, die bereits in den High-Power-Modus geschaltet wurden, eine Ausgangsleistung vorgesehen wird, die größer als eine Schwellenwert-Ausgangsleistung ist, eine nächste Stromversorgungseinheit in den High-Power-Modus geschaltet wird.

5. Gleichstromverteilungssystem nach Anspruch 1, wobei die Stromversorgungseinheiten in einem High-Power-Modus, in dem höhere Leistung zugeführt wird, und in einem Low-Power-Modus, in dem geringere Leistung zugeführt wird, betriebsfähig sind, wobei das Stromversorgungssteuersystem so eingerichtet ist, dass es die Stromversorgungseinheiten so steuert, dass die Gesamtzeiten, in denen die jeweilige Stromversorgungseinheit in dem High-Power-Modus betrieben wird, um weniger als einen vordefinierten Schwellenwert differieren.

6. Gleichstromverteilungsverfahren, wonach:
- Gleichstromleistung einem elektrischen Verbraucher (4) von mehreren Stromversorgungseinheiten (3) über einen elektrischen Leiter (2), mit dem die Stromversorgungseinheiten (3) und der elektrische Verbraucher (4) elektrisch verbunden sind, zugeführt wird,
- von dem elektrischen Verbraucher (4) die Gleichstromleistung von den mehreren Stromversorgungseinheiten (3) über den elektrischen Leiter (2) empfangen wird,
- von einem Leistungsaufnahme-Informationsbereitstellungssystem (7) Leistungsaufnahme-Informationen bereitgesellt werden, die für die von dem elektrischen Verbraucher (4) verbrauchte Leistung indikativ sind,
- von einem Stromversorgungssteuersystem (10) die Stromversorgungseinheiten (3) in Abhängigkeit der vorgesehenen Leistungsaufnahmeinformationen gesteuert werden,
wobei das Leistungsaufnahme-Informationsbereitstellungssystem mehrere, den Stromversorgungseinheiten (3) zugewiesene Leistungsaufnahme-Informationsbereitstellungs-Subeinheiten (7) umfasst,
wobei eine einer Stromversorgungseinheit (3) zugewiesene Leistungsaufnahme-Informationsbereitstellungs-Subeinheit (7) die Leistungsaufnahmeinformationen ermittelt, und
wobei das Stromversorgungssteuersystem mehrere, den Stromversorgungseinheiten (3) zugewiesene Stromversorgungssteuerungs-Subeinheiten (10) umfasst, wobei eine einer Stromversorgungseinheit (3) zugewiesene Stromversorgungssteuerungs-Subeinheit (10) die jeweilige Stromversorgungseinheit (3) in Abhängigkeit der von der Leistungsaufnahme-Informationsbereitstellungs-Subeinheit (7) ermittelten Leistungsaufnahme-Informationen steuert,
**dadurch gekennzeichnet, dass** gemäß dem Verfahren weiterhin:
- dem elektrischen Verbraucher (4) von einer Steuereinheit (8) des elektrischen Verbrauchers Befehle zur Steuerung des elektrischen Verbrauchers (4) übermittelt werden,
- die Befehle ebenfalls den Stromversorgungseinheiten (3) von der Steuereinheit (8) des elektrischen Verbrauchers übermittelt werden, und
wobei die einer Stromversorgungseinheit (3) zugewiesene Leistungsaufnahme-Informationsbereitstellungs-Subeinheit (7) die Leistungsaufnahme-Informationen aufgrund der übermittelten Befehle ermittelt.

7. Gleichstromverteilungs-Computerprogramm, wobei das Gleichstromverteilungs-Computerprogramm Programmcodemittel umfasst, um zu bewirken, dass ein Gleichstromverteilungssystem nach Anspruch 1 die Schritte des Gleichstromverteilungsverfahrens nach Anspruch 6 ausführt, wenn das Gleichstromverteilungs-Computerprogramm auf einem das Gleichstromverteilungssystem steuernden Computer abläuft.

## Revendications

1. Système de distribution d'énergie électrique CC, comprenant :
- un conducteur électrique (2) pour guider de l'énergie électrique CC à partir de plusieurs unités d'alimentation en énergie électrique (3) à un consommateur électrique (4),
- les unités d'alimentation en énergie électrique (3) étant destinées à fournir de l'énergie électrique CC au consommateur électrique (4), dans lequel les unités d'alimentation en énergie électrique (3) sont électriquement connectées au conducteur électrique (2),
- le consommateur électrique (4) étant électriquement connecté au conducteur électrique (2) pour recevoir l'énergie électrique CC à partir des unités d'alimentation en énergie électrique (3), et
- un système de fourniture d'informations de consommation d'énergie électrique (7) pour fournir des informations de consommation d'énergie électrique indicatives de l'énergie électrique consommée par le consommateur électrique (4),
- un système de commande d'alimentation en énergie électrique (10) pour commander les unités d'alimentation en énergie électrique (3) en fonction des informations de consommation d'énergie électrique fournies,
dans lequel le système de fourniture d'informations de consommation d'énergie électrique comprend plusieurs sous-unités de fourniture d'informations de consommation d'énergie électrique (7) attribuées aux unités d'alimentation en énergie électrique (3), dans lequel une sous-unité de fourniture d'informations de consommation d'énergie électrique (7) attribuée à une unité d'alimentation en énergie électrique (3) est adaptée pour déterminer les informations de consommation d'énergie électrique, et dans lequel le système de commande d'alimentation en énergie électrique comprend plusieurs sous-unités de commande d'alimentation en énergie électrique (10) attribuées aux unités d'alimentation en énergie électrique (3), dans lequel une sous-unité de commande d'alimentation en énergie électrique (10) attribuée à une unité d'alimentation en énergie électrique (3) est adaptée pour commander l'unité d'alimentation en énergie électrique respective (3) en fonction des informations de consommation d'énergie électrique déterminées par la sous-unité de fourniture d'informations de consommation d'énergie électrique respective (7), **caractérisé en ce que** le système de distribution d'énergie électrique CC (1) comprend en outre une unité de commande de consommateur électrique (8) pour envoyer des instructions au consommateur électrique (4) pour commander le consommateur électrique (4) et pour envoyer les instructions également aux unités d'alimentation en énergie électrique (3), et
dans lequel la sous-unité de fourniture d'informations de consommation d'énergie électrique (7) attribuée à une unité d'alimentation en énergie électrique (3) est adaptée pour déterminer les informations de consommation d'énergie électrique en fonction des instructions envoyées.

2. Système de distribution d'énergie électrique CC selon la revendication 1, dans lequel au moins une unité d'alimentation en énergie électrique (3) est utilisable dans un mode à haute puissance, dans lequel une puissance plus élevée est fournie, et dans un mode à basse puissance, dans lequel une puissance plus basse est fournie, dans lequel la sous-unité de commande d'alimentation en énergie électrique respective (10) attribuée à l'unité d'alimentation en énergie électrique (3) est adaptée pour commander l'unité d'alimentation en énergie électrique (3) de telle sorte qu'elle soit dans le mode à basse puissance, si les informations de consommation d'énergie électrique déterminées par la sous-unité de fourniture d'informations de consommation d'énergie électrique respective (7) indiquent que le consommateur électrique (4) requiert la puissance plus basse ou moins.

3. Système de distribution d'énergie électrique CC selon la revendication 1, dans lequel au moins une unité d'alimentation en énergie électrique (3) est utilisable dans un mode à haute puissance, dans lequel une puissance plus élevée est fournie, et dans un mode à basse puissance, dans lequel une puissance plus basse est fournie, dans lequel la sous-unité de commande d'alimentation en énergie électrique respective (10) attribuée à l'unité d'alimentation en énergie électrique (3) est adaptée pour commander l'unité d'alimentation en énergie électrique (3) de telle sorte qu'elle soit dans le mode à haute puissance, si les informations de consommation d'énergie électrique déterminées par la sous-unité de fourniture d'informations de consommation d'énergie électrique respective (7) indiquent que le consommateur électrique (4) requiert plus que la puissance plus basse.

4. Système de distribution d'énergie électrique CC selon la revendication 1, dans lequel les unités d'alimentation en énergie électrique sont utilisables dans un mode à haute puissance, dans lequel une puissance plus élevée est fournie, et dans un mode à basse puissance, dans lequel une puissance plus basse est fournie, dans lequel le système de fourniture d'informations de consommation d'énergie électrique est adapté pour fournir la puissance de sortie fournie par l'unité d'alimentation en énergie électrique respective en tant qu'informations de consommation d'énergie électrique, dans lequel le système de commande d'alimentation en énergie électrique est adapté pour commuter séquentiellement les unités d'alimentation en énergie électrique au mode à haute puissance en fonction des informations de consommation d'énergie électrique, dans lequel, si, pour des unités d'alimentation en énergie électrique qui ont déjà été commutées au mode à haute puissance, une puissance de sortie est fournie qui est supérieure à une puissance de sortie de seuil, une unité d'alimentation en énergie électrique suivante est commutée au mode à haute puissance.

5. Système de distribution d'énergie électrique CC selon la revendication 1, dans lequel les unités d'alimentation en énergie électrique sont utilisables dans un mode à haute puissance, dans lequel une puissance plus élevée est fournie, et dans un mode à basse puissance, dans lequel une puissance plus basse est fournie, dans lequel le système de commande d'alimentation en énergie électrique est adapté pour commander les unités d'alimentation en énergie électrique de telle sorte que les périodes totales, dans lesquelles l'unité d'alimentation en énergie électrique respective est mise en fonctionnement dans le mode à haute puissance, diffèrent selon une quantité inférieure à un seuil prédéfini.

6. Procédé de distribution d'énergie électrique CC, comprenant :
- la fourniture d'énergie électrique CC à un consommateur électrique (4) par plusieurs unités d'alimentation en énergie électrique (3) par l'intermédiaire d'un conducteur électrique (2) auquel les unités d'alimentation en énergie électrique (3) et le consommateur électrique (4) sont électriquement connectés,
- la réception de l'énergie électrique CC, à partir des unités d'alimentation en énergie électrique (3), par l'intermédiaire du conducteur électrique (2), par le consommateur électrique (4),
- la fourniture d'informations de consommation d'énergie électrique indicatives de l'énergie électrique consommée par le consommateur électrique (4), par un système de fourniture d'informations de consommation d'énergie électrique (7),
- la commande des unités d'alimentation en énergie électrique (3) en fonction des informations de consommation d'énergie électrique fournies, par un système de commande d'alimentation en énergie électrique (10),
dans lequel le système de fourniture d'informations de consommation d'énergie électrique comprend plusieurs sous-unités de fourniture d'informations de consommation d'énergie électrique (7) attribuées aux unités d'alimentation en énergie électrique (3),
dans lequel une sous-unité de fourniture d'informations de consommation d'énergie électrique (7) attribuée à une unité d'alimentation en énergie électrique (3) détermine les informations de consommation d'énergie électrique, et
dans lequel le système de commande d'alimentation en énergie électrique comprend plusieurs sous-unités de commande d'alimentation en énergie électrique (10) attribuées aux unités d'alimentation en énergie électrique (3), dans lequel une sous-unité de commande d'alimentation en énergie électrique (10) attribuée à une unité d'alimentation en énergie électrique (3) commande l'unité d'alimentation en énergie électrique respective (3) en fonction des informations de consommation d'énergie électrique déterminées par la sous-unité de fourniture d'informations de consommation d'énergie électrique respective (7),
**caractérisé en ce que** le procédé comprend en outre :
- l'envoi, par une unité de commande de consommateur électrique (8), d'instructions au consommateur électrique (4) pour commander le consommateur électrique (4),
- l'envoi, par l'unité de commande de consommateur électrique (8), desdites instructions également aux unités d'alimentation en énergie électrique (3), et
dans lequel la sous-unité de fourniture d'informations de consommation d'énergie électrique (7) attribuée à une unité d'alimentation en énergie électrique (3) détermine les informations de consommation d'énergie électrique en fonction des instructions envoyées.

7. Programme d'ordinateur de distribution d'énergie électrique CC, le programme d'ordinateur de distribution d'énergie électrique CC comprenant des moyens codes de programme pour faire en sorte qu'un système de distribution d'énergie électrique CC selon la revendication 1 réalise les étapes du procédé de distribution d'énergie électrique CC selon la revendication 6, lorsque le programme d'ordinateur de distribution d'énergie électrique CC est exécuté sur un ordinateur commandant le système de distribution d'énergie électrique CC.
